# EUROPÄISCHE PATENTANMELDUNG

(11) **EP 2 077 073 A1**
(43) Veröffentlichungstag der Anmeldung: **08.07.2009**
(21) Anmeldenummer: 09003713.6
(22) Anmeldetag: 31.08.2006
(51) Int. Cl.: A01M 1/20, A01N 25/18, B65B 1/00

(54) **Verfahren und Vorrichtung zum Bedrucken eines Vliesstoffes für Beutel für insektizid- und/oder duftstoffhaltiges Trägermaterial, insbesondere für Mottenschutzsäckchen**

(30) Priorität: 20.10.2005 DE 202005016557 U; 01.03.2006 DE 202006003324 U; 03.04.2006 DE 202006005394 U
(62) Teilanmeldung aus: 06018195.5
(71) Anmelder: ARIS Handels GmbH, 85049 Ingolstadt (DE)
(72) Erfinder: Ledin, Ali, 85053 Ingolstadt (DE); Önem-Siakou, Evgenia, Dr., 85049 Ingolstadt (DE)
(74) Vertreter: Liebl, Thomas

(57) **Zusammenfassung**

Die Erfindung betrifft ein Verfahren zum Bedrucken eines Vliesstoffes für Beutel für insektizid- und/oder duftstoffhaltiges Trägermaterial, insbesondere für Mottenschutzsäckchen. Erfindungsgemäß wird der Vliesstoff als Vliesstoffbahn (11) mit einem Vliesstoff-Druckbereich (12) für eine vorgegebene Verweilzeit in eine Siebdruckvorrichtung (9), insbesondere in eine Flachbett-Siebdruckvorrichtung, eingebracht, in der der Vliesstoff einseitig mit Druckfarbebedruckt wird.

## Beschreibung

Die Erfindung betrifft ein Verfahren und eine Vorrichtung zum Bedrucken eines Vliesstoffes für Beutel für insektizid- und/oder duftstoffhaltiges Trägermaterial, insbesondere Mottenschutzsäckchen, nach dem Oberbegriff des Anspruchs 1.

Aus der EP 0 131 759 A2 ist ein Beutel für insektizidhaltiges Trägermaterial bekannt, der eine aus einem dampf- und/oder gasdurchlässigen Vliesstoff gebildete Beutelwand aufweist. Von der Beutelwand ist ein Hohlraum als Beutelinnenraum umgrenzt, in dem ein insektizidhaltiges Trägermaterial aufgenommen ist, wobei auf der Beutelaußenseite als Sichtseite mittels einer Druckfarbe ein unspezifizierter Beutelaufdruck aufgebracht sein kann. Konkret ist der Vliesstoff hier als Mehrkomponentenvliesstoff ausgebildet, der mindestens ein faserbildendes Material mit einem Schmelz- bzw. Erweichungspunkt über 165° C und ein zweites Material mit thermoplastischen Eigenschaften und einem Schmelz- bzw. Erweichungspunkt unter 145° C umfasst. Das faserbildende Material ist hier vorzugsweise ein Polyamid, Polyester, Polyacrylharz, Polypropylen und Glasfasern, deren Faserlänge zwischen 5 bis 20mm beträgt. Auch das zweite, thermoplastische Eigenschaften aufweisende Material soll faserartig vorliegen, und zwar mit einer Faserlänge zwischen 0,5 bis 1 mm. Dieses zweite Material soll beispielsweise Polyethylen, Copolymere aus Ethylen, Propylen oder Butylen und Vinylacetat bzw. Polypropylen sein. Zur Herstellung des Vliesstoffes werden das faserbildende Material einerseits und das zweite, thermoplastische Eigenschaften aufweisende Material im Verhältnis 50:50 bis 70:30 Gew. % unter Verwendung eines Bindemittels verfestigt. Auf den so hergestellten Vliesstoff wird eine Beschichtung aus einem thermoplastischen Material zumindest in denjenigen Bereichen aufgebracht, wo der Vliesstoff anschließend zur Beutelausbildung mit einer Verschweißungsnaht versehen werden soll. Der Vliesstoff selbst wird mit einem Flächengewicht zwischen 50 und 120g pro qm hergestellt. Dieser fertig hergestellte Vliesstoff kann dann durch Kalandrieren, Bedrucken, Färben, etc. veredelt werden. Ferner ist vorgesehen, die Fliesstoffbahnen und/oder die fertigen Beutel mit einem geeigneten hydrophobierenden Mittel zu imprägnieren, damit das Beutelmaterial selbst besser wasserabstoßend ist.

Als Schädlingsbekämpfungsmittel bzw. Insektizide werden Phosphid entwickelnde Zusammensetzungen auf der Basis von Erdalkali- und/oder Erdmetallphosphiden, insbesondere Calziumphosphid, Magnesiumphosphid und vorzugsweise Aluminiumphosphid vorgeschlagen. Die Erdalkali- und/oder Ermetallphosphide werden hauptsächlich als Rodentizide in der Begasung angewendet. Das durch die Hydrolyse entstandene Phosphin (PH₃) ist sehr giftig und für den Haushalt ungeeignet.

Nach dem Falten der Vliesstoffbahn zu einer Beuteltasche, dem Befüllen der Beuteltasche mit dem insektizidhaltigen Trägermaterial und dem anschließenden Fertigverschweißen des Vliesstoffbeutels wird dieser so fertig hergestellte Beutel gas- und feuchtigkeitsdicht verpackt, wozu beispielhaft eine Aluminiumfolienverpackung oder eine Dose vorgeschlagen wird.

Derartige insektizidhaltige Beutel haben jedoch den Nachteil, dass sie in ihrer olfaktorischen Wahrnehmung von Menschen regelmäßig als stechend, beißend bzw. gestankähnlich wahrgenommen werden. Dadurch bestehen mit derartigen Produkten Probleme hinsichtlich der Kundenakzeptanz.

Durch die Zugabe von Duftstoffen, wie dies in Verbindung mit blattartigen, mit Insektizid und Parfums getränkten Trägermaterialien z. B. aus der DE 34 212 90 A1 bekannt ist, kann die olfaktorische Wahrnehmung positiv verändert werden, was die Kundenakzeptanz wesentlich erhöht.

Werden jedoch den zuvor näher beschriebenen insektizidhaltigen Beuteln zusätzlich Duftstoffe zugegeben, z. B. Duftöle und dergleichen, besteht die Gefahr, dass die den Beutelaufdruck ausbildende Druckfarbe bei einer Beutelwandbenetzung und/oder Beutelwanddurchnässung mit den darin aufgenommenen Medien abfärbt, was insbesondere bei der Verwendung eines solchen Beutels als Mottenschutzsäckchen in Verbindung mit Kleidungsstücken zu einer unerwünschten Beschädigung und/oder Zerstörung der Kleidungsstücke führen kann. Besonders empfindlich gegenüber Duftstoffen haben sich hierbei Vliesstoff-Beutel erwiesen, die eine groß- bzw. vollflächige Außenbedruckung aufweisen.

Ein weiterer Nachteil dieser Beutel besteht in der unkontrollierten Wirkstoffabgabe, d. h. hohe, rasch abfallende Wirkstoffabgabe über einen lediglich kurzen Zeitraum.

Aufgabe der Erfindung ist es daher, ein Verfahren und eine Vorrichtung zum Bedrucken eines Vliesstoffes für Beutel für insektizid- und/oder duftstoffhaltiges Trägermaterial, insbesondere für Mottenschutzsäckchen, zur Verfügung zu stellen, mittels dem die Beutel auf einfache Weise mit hoher Qualität hergestellt werden können.

Diese Aufgabe wird gelöst mit den Merkmalen der unabhängigen Ansprüche. Vorteilhafte Ausgestaltungen sind Gegenstand der Unteransprüche.

Erfindungsgemäß wird der Vliesstoff als Vliesstoffbahn mit einem Vliesstoff-Druckbereich für eine vorgegebene Verweilzeit in eine Siebdruckvorrichtung, die insbesondere als Flachbett-Siebdruckvorrichtung ausgebildet ist, eingebracht, in der der Vliesstoff einseitig mit Druckfarbe, insbesondere mit einer einen Härterbestandteil aufweisenden Druckfarbe bedruckt wird.

Besonders bevorzugt wird der unbedruckte Vliesstoff von einer in Bahnlaufrichtung gesehen vor der Siebdruckvorrichtung angeordneten Vliesstoff-Abwickelrolle abgewickelt, wobei der bedruckte Vliesstoff zudem auf eine in Bahnlaufrichtung gesehen nach der Siebdruckvorrichtung angeordnete Vliesstoff-Aufwickelrolle aufgewickelt wird. Im Bereich der Vliesstoff-Aufwickelrolle ist ferner eine Erfassungseinrichtung vorgesehen, die die Vliesstoffbahnspannung und/oder den Druckbildabstand zwischen den einzelnen, jedem Beutel zugeordneten Druckbildern vorgibt und erfasst, wobei die von der Erfassungseinrichtung erfassten Ergebnisse an eine Steuer- und/oder Regeleinrichtung übermittelt werden, die anhand dieser Ergebnisse die Bedruckparameter, insbesondere aber die Taktzeit und damit die Verweilzeit des Vliesstoff-Druckbereiches sowie auch die Vliesstoffbahnspannung in der Siebdruckvorrichtung, vorgeben. Damit wird eine einfache und funktionssichere Verfahrensführung zur Verfügung gestellt, mittels der eine gleichbleibende Druckqualität für den Aufdruckvorgang erzielt wird.

Besonders bevorzugt wird der Druckbildabstand konkret mittels einer optischen Messeinrichtung, beispielsweise einer Fotozelle oder dergleichen erfasst, die stationär angeordnet sein kann und an der die bedruckte Vliesstoffbahn bevorzugt vorbeibewegt wird. Mit derartigen Fotozellen ist eine einfache und zuverlässige Erfassung des Druckbildabstandes möglich.

Die Vliesstoffbahn wird nach dem Druckvorgang in der Siebdruckvorrichtung mit dem bedruckten Vliesstoff-Druckbereich so weiter getaktet, dass der frisch bedruckte Vliesstoff-Druckbereich für eine vorgegebene Verweilzeit einer Trocknungseinrichtung zugeführt wird, in der dieser frisch bedruckte Vliesstoff-Druckbereich mit Wärme wenigstens einer Heizvorrichtung beaufschlagt wird. Als Heizvorrichtung eignet sich insbesondere ein oder mehrere Heizstrahler. Die Verweilzeit des frisch bedruckten Vliesstoff-Druckbereiches in oder im Bereich der Heizvorrichtung kann dabei auch mehrere Drucktakte betragen, indem z. B. die Heizvorrichtung so ausgebildet wird, dass der frisch bedruckte Vliesstoff-Druckbereich für mehrere Drucktakte im Bereich der Heizvorrichtung verbleibt. Besonders bevorzugt wird die Temperatur im Bereich der Heizvorrichtung zwischen 40 und 70°C gehalten.

Nach diesem Trocknungsvorgang wird der Vliesstoff-Druckbereich bevorzugt auf eine eine vorgegebene Länge an bedrucktem Vliesstoff aufweisende Vliesstoffrolle aufgewickelt und in eine Trockenkammer eingebracht, in der die Vliesstoffrolle mit einem Warmluftstrom vorgegebener Temperatur, insbesondere in Höhe von 40 bis 70°C, beaufschlagt wird. Eine derartige Wärmebeaufschlagung bewirkt vor allem ein Austreiben von noch vorhandenem Restlösemittel bzw. auch eine endgültige Aushärtung des Beutelaufdrucks. Gegenüber einer Trocknung an der Umgebung kann somit hier die Bereitstellungszeit für eine Weiterverarbeitung der Vliesstoffbahnen zu Beuteln erheblich reduziert werden, nämlich von 3 bis 4 Tagen auf 1 bis 2 Tage.

Die zuvor zu den Verfahren gemachten Ausführungen betreffen neben den Verfahrensmerkmalen auch Vorrichtungsmerkmale. An dieser Stelle sei explizit nochmals ausgeführt, dass diese Vorrichtungsmerkmale zur Durchführung der zuvor genannten Verfahren ausdrücklich auch als solche beansprucht werden.

Dadurch kann zum einen eine für die Einstellung der Permeabilität des Beutels erforderliche Anzahl von Rasterpunkten pro vorgegebener Fläche einfach und funktionssicher aufgebracht werden. Zudem wird durch das Siebdruckverfahren, insbesondere das bevorzugte Flachbett-Siebdruckverfahren, sichergestellt, dass die elastische Vliesstoffbahn nicht verzogen wird, womit ein exaktes Druckbild mit exaktem Stand entsteht.

In dem Beutelinnenraum ist neben dem insektizidhaltigen Trägermaterial bevorzugt auch ein duftstoffhaltiges Trägermaterial aufgenommen, wodurch eine gewünschte olfaktorische Wahrnehmung eingestellt werden kann. Der Beutelaufdruck ist weiter bevorzugt mittels einer bei einer Beutelwandbenetzung und/oder Beutelwanddurchnässung mit Insektizid und/oder Duftstoff nicht abfärbenden Druckfarbe ausgebildet. Eine derartige Nichtabfärbung wird bevorzugt mittels einer Zweikomponentenfarbe als Druckfarbe erzielt, die einen Härterbestandteil vorgegebener Konzentration aufweist. Damit kann auch bei einer hohen zusätzlichen Duftstoffkonzentration ein Abfärben der Druckfarbe, insbesondere bei ganz- bzw. vollflächig bedruckten Beutelaußenseiten, bei denen viel Farbe aufgebracht ist, verhindert werden.

Erfindungsgemäß ist weiter vorgesehen, die Beutelwand zur Einstellung einer definierten Permeabilität der Beutelwand und damit einer definierten Gasdurchlässigkeit bzw. Dampfdurchlässigkeit an der Beutelaußenseite mit einer vorgegebenen Anzahl von Rasterpunkten pro vorgegebener Fläche, vorzugsweise pro cm², zu bedrucken. Damit kann, abgestimmt auf die eingebrachten Duftstoffe und/oder Wirkstoffe, eine gewünschte Verdampfungs- bzw. Ausgasungsrate eingestellt werden. Dies ist wesentlich, um beispielsweise für die Anwendung als Mottenschutzsäckchen eine relativ lange Wirksamkeitszeitdauer einstellen zu können. Diese Erfindungsvariante ist unabhängig von den im Beutelinnenraum aufgenommenen Stoffen, die Wirkstoffe bzw. Insektizide oder Duftstoffe allein sein können, wobei jedoch die Kombination von Duftstoffen und Insektiziden die bevorzugte Variante ist. Wie zudem umfangreiche erfinderseitige Versuche gezeigt haben, werden besonders zufriedenstellende Ergebnisse dann erreicht, wenn die Anzahl der Rasterpunkte zwischen 12 und 48 Rasterpunkten pro 1 cm² bedruckter Fläche liegt.

Die Beutelwand ist in der Erfindung höchst bevorzugt durch einen Vliesstoff gebildet. Selbstverständlich können aber grundsätzlich auch alle anderen geeigneten, eine ähnliche Permeabilität bzw. Gasdurchlässigkeit und im wesentlichen die gleichen Eigenschaften wie ein Vliesstoff aufweisenden Materialien verwendet werden, z.B. Filze oder Gewebe, Gewirke, Gestricke aus Textilien und/oder Kunststoffen, um nur einige beispielhaft aufzuzählen.

Die erfinderseitigen umfangreichen Versuche haben zudem gezeigt, dass es auch bei hohen Insektizid- und vor allem hohen Duftstoffkonzentrationen zu keinem unerwünschten Abfärben bzw. Ablösen der Druckfarbe kommt, wenn diese als Zweikomponentenfarbe eine Härterkonzentration zwischen 1 bis 35 Gew. %, bevorzugt zwischen 3 bis 25 Gew. %, höchst bevorzugt zwischen 5 bis 23 Gew. % aufweist. Die Gew. %-Angaben sind hier jeweils auf das Gesamtgewicht der Zweikomponentenfarbe bezogen. Besonders widerstandsfähig gegen Insektizide und insbesondere Duftstoffe sind Beutelaufdrucke, bei denen auf 1 cm² bedruckten Außenwandbereich 0,05 bis 1 mg, bevorzugt 0,07 bis 0,3 mg und höchst bevorzugt 0,10 bis 0,2 mg der Zweikomponentenfarbe aufgebracht werden. Insbesondere die Kombination dieser Farbauftragsmenge mit der zuvor angegebenen Härterkonzentration in der Zweikomponentenfarbe bzw. der wirk- und/oder duftstoffspezifisch vorgegebenen Anzahl der Rasterpunkte pro 1 cm² hat sich als besonders widerstandsfähig gegen das Ablösen bzw. Abfärben des Beutelaufdrucks bei einer Beutelwandbenetzung bzw. Beutelwanddurchnässung mit Insektizid und/oder Duftstoff gezeigt.

Grundsätzlich bestünde aber auch die Möglichkeit, als Druckfarbe eine mittels UV-Bestrahlung aushärtbare UV-Farbe anstelle einer Zweikomponentenfarbe mit Härterbestandteil zu verwenden, was aber wegen der dabei stark auftretenden, als unangenehm empfundenen Geruchsbildung derzeit als nicht vorteilhaft angesehen wird.

Die Zweikomponentenfarbe kann zusätzlich mit vorgegebenen Mengen einer Transparentpaste vermischt sein, um den gewünschten Farbton des Beutelaufdrucks einzustellen. Ebenso kann gemäß einer bevorzugten Ausgestaltung ein Verdünner hinzugegeben werden, mittels dem die Druckfarbe druckfertig gemacht wird. Auch ein Verzögerer kann hinzugegeben werden, mittels dem der Aushärtezeitraum eingestellt werden kann. Die Farbkomponente der Zweikomponentenfarbe ist bevorzugt eine Polyester- oder Polyurethanfarbkomponente, der Härter z. B. ein Siloxan, während der Verdünner bevorzugt ein Essigsäureester und der Verzögerer ein Keton des Cyclohexans, z. B. Isophoron, ist.

Als Vliesstoff selbst wird bevorzugt ein parallelgebundenes Vlies verwendet, das ein Vliesgewicht zwischen 40 und 150 g/m², bevorzugt zwischen 60 bis 120 g/m² und höchst bevorzugt von 80 g/m² aufweist. Mit einem derartigen parallelgebundenen Vlies wird eine sehr gute Insektizid- und/oder Duftstoffdurchlässigkeit durch die Beutelwand erzielt. Grundsätzlich kann auch ein kreuzgebundenes Vlies verwendet werden, dessen Durchlässigkeit hinsichtlich der Insektizide- und Duftstoffe jedoch geringer ist.

Weiter bevorzugt ist der Vliesstoff durch ein wasserstrahlverfestigtes Polymer, vorzugsweise ein synthetisches Polymer, höchst bevorzugt ein mit Polyethylen beschichtetes Polyester gebildet. Alternativ dazu kann der Vliesstoff aber auch durch ein Polyester-Viskose-Vlies gebildet sein. Derartige Vliesstoffe eignen sich hervorragend für die Verwendung als Aufnahmebeutel für Insektizide und/oder Duftstoffe, die über die Beutelwand abgegeben werden sollen.

Konkret ist der Beutel aus einer Vliesstoffbahn gebildet, die auf einer später die Außenseite bildenden ersten Seite mit dem Beutelaufdruck und auf einer später die Beutelinnenwand bildenden zweiten Seite wenigstens bereichsweise mit einer Befestigungsschicht, vorzugsweise mit einer Schicht aus einem Thermoplastmaterial, insbesondere einer Polyethylenschicht, beschichtet ist, mittels der vorgegebene Beutelwandbereiche zur Ausbildung des Beutels aneinander angehaftet werden können, z. B. durch Verschweißen oder dergleichen.

In dem Beutelinnenraum ist bevorzugt zusätzlich zum insektizid- und/oder duftstoffhaltigen Trägermaterial weiteres Füllmaterial aufgenommen, was z. B. ein Kunststoffgranulat sein kann als bloßes, keine weitere Funktion aufweisendes Kunststoffgranulat. Das zusätzliche Füllmaterial kann aber gemäß einer besonders bevorzugten Ausgestaltung auch durch Dufthölzer und/oder Blüten ausgebildet sein, die neben ihrer Grundfunktion als Füllmaterial zusätzlich in einer besonders vorteilhaften Doppelfunktion auch gleichzeitig einen gewünschten Duftstoff zusätzlich zum Insektizid abgeben. Als Dufthölzer und/oder Duftblüten kommen insbesondere Lavendel, Zedernholz, Hopfenblütenöl, Jasmin, Rosenblätter und Veilchen in Frage. Für den Fall einer reinen Duftstoffabgabe können diese Dufthölzer und/oder Blüten auch als Trägermaterial verwendet werden.

Die Anforderungen, welche das Trägermaterial erfüllen muss, sind besonders hoch. Beispielsweise muss es eine hohe Aufnahmekapazität, eine schnelle Aufnahme und eine konstante Abgabe des Wirk- und Duftgemisches zur Verfügung stellen, so dass die Wirksamkeit von z. B. Mottenschutzsäckchen bis zu einem Standardzeitraum von drei Monaten nach dem Öffnen gegeben ist. All diese Anforderungen werden durch mikroporöse Kunststoffe erfüllt. Als besonders geeignet für die Anwendung in den Mottensäckchen haben sich mikroporöse Kunststoffe aus Polypropylen und/oder Polyethylen und/oder Polyamid und/oder Polyacrylat oder Derivaten dieser Kunststoffe, insbesondere Kunststoffe aus PP, HDPE, LDPE, LLDPE, EVA und PA-6 herausgestellt. Versuche mit diesen Materialien zeigen eine Verlängerung der Wirksamkeit von bis zu 5 Monaten. Gemäß einer besonders bevorzugten Ausgestaltung der Erfindung hierzu ist vorgesehen, dass das Trägermaterial durch ein mikroporöses Kunststoffgranulat gebildet ist, das wenigstens 100%, vorzugsweise wenigstens 200% seines Eigengewichtes an Insektizid- und/oder Duftstoffmenge speichert. Mit einem derartigen mikroporösen Kunststoffgranulat, das ein Vielfaches seines Eigengewichtes an Insektiziden und/oder Duftstoffen einspeichern kann, wird auf vorteilhafte Weise eine hohe Insektizid-und/oder Duftstoffkonzentration im Beutel ohne Vergrößerung des Beutelvolumens möglich, wobei aufgrund der erfindungsgemäßen Bedruckung mit einer nicht abfärbenden Druckfarbe, insbesondere mit einer einen Härter aufweisenden Zweikomponentenfarbe, zudem bei einer Beutelwanddurchnässung keine Ablösegefahr der Farbe besteht. Dieses mikroporöse Kunststoffgranulat speichert die Duftstoffe und/oder Insektizide in den Mikroporen und gibt diese insbesondere bei Luftkontakt in gas- oder dampfförmiger Form ab, wodurch diese über die Beutelwand des Vliesstoffbeutels in die Umgebung entweichen können.

Das Insektizid bzw. der Wirkstoff selbst ist bevorzugt durch Substanzen aus der Gruppe der Pyrethroide gebildet, wobei hier insbesondere das Transfluthrin und/oder Emphentrin und/oder D-Phenotrin und/oder Metofluthrin in Frage kommen. Höchst bevorzugt ist die Verwendung von Transfluthrin. Alternativ oder zusätzlich kann das Insektizid aber auch durch den natürlichen Wirkstoff Lavandinöl gebildet sein. Mit derartigen Insektiziden wird eine hohe Mortalität von Schädlingen, insbesondere von Motten erzielt.

In Verbindung mit einem einfachen und funktionssicheren Verfahren bzw. einer Vorrichtung zur Herstellung der Beutel ist es insbesondere von Vorteil, die abgelängten Beutel mittels einer Fördereinrichtung zu oder über eine Wägevorrichtung zu transportieren, um diejenigen Beutel aussortieren zu können, die nicht innerhalb eines vorgegebenen Gewichtsbereiches liegen. Die Aussortierung erfolgt hierbei vorzugsweise durch Druckluftbeaufschlagung, indem solche Beutel, die als außerhalb des vorgegebenen Gewichtsbereiches liegend erfasst worden sind, mittels eines Luftstroms weggeschossen werden. Weiter bevorzugt ist in diesem Zusammenhang eine Befüllvorrichtung für die Beutel, die einen ein- oder mehrkammerigen Dispenser aufweist, in der das Trägermaterial und/oder das weitere Füllmaterial aufgenommen ist und der pro Kammer eine Dispenser-Auslassöffnung aufweist, die mittels eines eine Durchlassöffnung pro Kammer aufweisenden Verschlusselementes verschließbar ist, so dass die Durchlassöffnung in der Dosierstellung mit der Dispenser-Auslassöffnung fluchtet und eine je nach - über die Taktung vorgegebene - Verweilzeit bestimmte Menge an Trägermaterial und/oder Füllmaterial freigibt, während die Dispenser-Auslassöffnung in der Nicht-Dosierstellung mittels des Verschlusselementes verschlossen ist.

Die Erfindung wird nachfolgend anhand einer Zeichnung näher erläutert.

Es zeigen:
- Fig. 1a: eine schematische Draufsicht auf einen als Mottenschutzsäck- chen ausgebildeten erfindungsgemäßen Beutel,
- Fig. 1b: eine schematische, stark vergrößerte Darstellung eines 1 cm² großen Wandabschnitts mit 12 Rasterpunkten (12er-Raster),
- Fig. 1c: eine schematische, stark vergrößerte Darstellung eines 1 cm² großen Wandabschnitts mit 28 Rasterpunkten (28er-Raster),
- Fig. 2: schematisch eine Schnittansicht entlang der Linie A-A der Fig. 1,
- Fig. 3 und 4: schematische Ansichten eines mittels einer Folienumverpa- ckung verpackten Mottenschutzsäckchens,
- Fig. 5: schematisch eine erfindungsgemäße Vorrichtung zum Bedru- cken des Vliesstoffes, und
- Fig. 6: schematisch eine erfindungsgemäße Vorrichtung zur Beutel- herstellung.

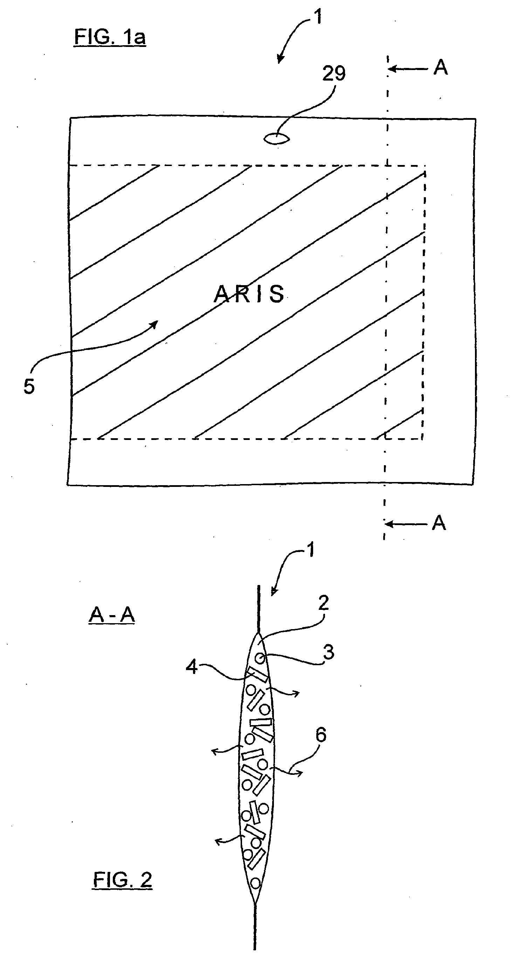

In der Fig. 1a ist schematisch eine Draufsicht auf ein Mottenschutzsäckchen 1 gezeigt, dessen Beutelwand aus einem dampf- und gasdurchlässigen Vliesstoff ausgebildet ist. Wie dies insbesondere der Fig. 2, die einen Schnitt entlang der Linie A-A der Fig. 1a zeigt, entnommen werden kann, weist das Mottenschutzsäckchen einen Beutelinnenraum 2 auf, in dem einerseits ein mit einem Insektizid getränktes Trägermaterial 3 und zusätzlich ein z. B. Kunststoffgranulat als Füllmaterial 4 aufgenommen ist. Anstelle eines Kunststoffgranulats kann das Füllmaterial 4 aber auch durch Blüten, z. B. getrocknete Blüten ausgebildet sein. Beispielsweise kommen hier Hopfenblüten, Rosenblüten etc. in Betracht.

Das Trägermaterial selbst ist bevorzugt ein mikroporöses Kunststoffgranulat aus z. B. Polypropylen, das ein Mehrfaches seines Eigengewichts an Insektizid einspeichern kann. Als Insektizid wird beispielsweise Transfluthrin verwendet.

Wie dies der Fig. 1a weiter entnommen werden kann, ist auf der Beutelaußenseite ein Beutelaufdruck 5 aus einer Zweikomponentenfarbe, die einen Härterbestandteil aufweist, aufgebracht. Ein derartiger im Siebdruckverfahren aufgebrachter Beutelaufdruck 5 ist selbst bei einer Beutelwandbenetzung und/oder Durchnässung mit Insektizid und/oder Duftstoff oder dergleichen nicht ablösend und kann daher damit in Berührung kommende Kleidungsstücke oder andere Textilien nicht beschädigen oder verschmutzen.

Wie dies schematisch in der Fig. 2 durch die Pfeile 6 dargestellt ist, können die im Beutelinnenraum 2 aufgenommenen Insektizide und/oder Duftstoffe mit Luft reagieren und ausgasen, so dass die Insektizide als Gas 6 durch die Vliesstoff-Beutelwand hindurch in die Umgebung entweichen können.

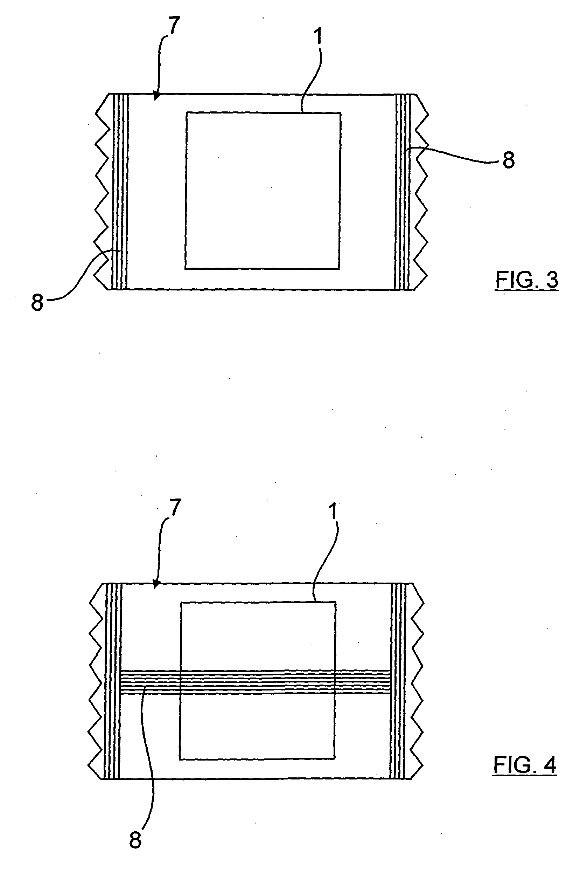

Um sicherzustellen, dass ein derartiges Entweichen des Insektizides und/oder der Duftstoffe aus dem Beutelinnenraum 2 nur im gewünschten Einsatzfall erfolgt, werden die Mottenschutzsäckchen 1, wie dies in den Figuren 3 und 4 dargestellt ist, mittels einer Folienumverpackung 7 gas- und flüssigkeitsdicht versiegelt. Die Folienumverpackung 7 ist durch einen Folienschlauch ausgebildet, der an den beiden gegenüberliegenden Randseiten jeweils eine Querverschweißung 8 aufweist, die anders als bei einer Längsverschweißung sicherstellt, dass auch bei einer ggf. leichten Beschädigung der Verschweißung keine Luft in die Folienumverpackung 7 gelangen und damit ein ggf. unerwünschtes Ausgasen des Insektizides und/oder Duftstoffes ermöglicht wird.

In der Fig. 4 ist eine Folienumverpackungsvariante gezeigt, bei der die Folienumverpackung 7 ferner auch noch in Längsrichtung gesehen verschweißt ist. Auch diese Verschweißung ist wiederum als Querschweißung 8 ausgebildet.

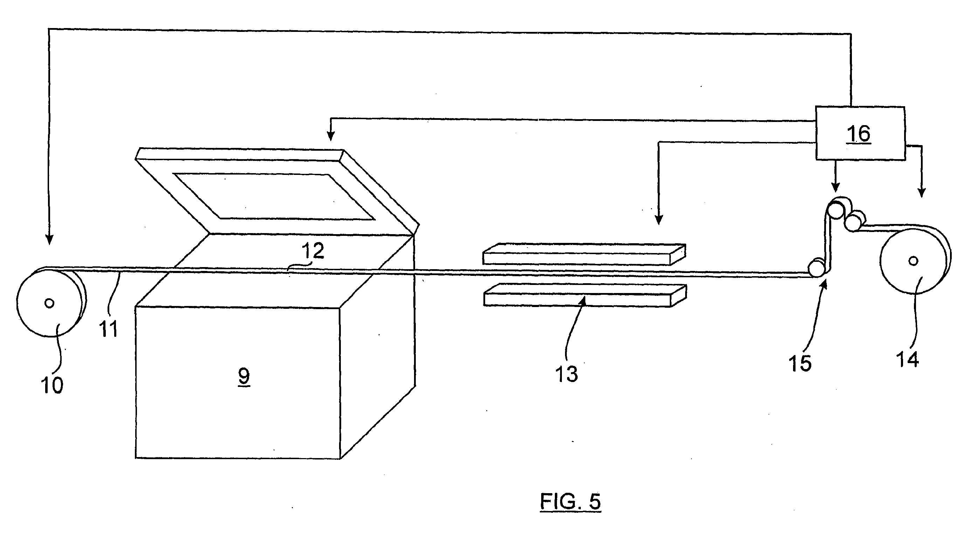

In der Fig. 5 ist schematisch eine Siebdruckvorrichtung 9, die hier als Flachbett-Siebdruckvorrichtung ausgebildet ist, gezeigt, in der der von einer Vliesstoff-Abwickelrolle 10 abgewickelte, unbedruckte Vliesstoff als Vliesstoffbahn 11 mit einem Vliesstoff-Druckbereich 12 für eine vorgegebene Verweilzeit entsprechend der Taktung der Siebdruckvorrichtung 9 eingebracht wird und dort mit einer Zweikomponentenfarbe, die einen Härterbestandteil aufweist, bedruckt wird, um eine Vliesstoffbahn 11 zur Verfügung zu stellen, die auf ihrer gesamten Bahnlänge eine Mehrzahl von gleichmäßig voneinander beabstandeten, später einen Beutelaufdruck 5 ausbildenden Druckbereichen ausbildet. Unmittelbar nach der Siebdruckvorrichtung 9 ist hier eine lediglich schematisch gezeigte Heizvorrichtung 13 angeordnet, die beispielsweise durch Heizstrahler gebildet sein kann, die den frisch bedruckten Vliesstoff-Druckbereich für eine vorgegebene Zeitdauer mit Wärme beaufschlagen, um die Druckfarbe zu trocknen und eine Aushärtung des Härterbestandteils durch Vernetzung insbesondere auch mit dem Vliesstoff zu ermöglichen.

Der Heizvorrichtung 13 ist wiederum eine Vliesstoff-Aufwickelrolle 14 nachgeschaltet, die die bedruckte Vliesstoffbahn im getrockneten Zustand aufwickelt.

Um in der Vliesstoffbahn 11 zwischen der Vliesstoff-Abwickelrolle 10 und der Vliesstoff-Aufwickelrolle 14 eine die Vliesstoffbahn 11 straffende Spannung aufrechtzuerhalten, ist der Vliesstoff-Aufwickelrolle 14 ferner noch eine Spanneinrichtung 15 vorgeschaltet, mittels der z. B. auf der Basis einer hier nicht dargestellten Druckbildabstandserfassung die richtige Spannung eingestellt werden kann. Die Spanneinrichtung 15 wird hier ebenso wie die Siebdruckvorrichtung 9, die Vliesstoff-Abwickelrolle 10, die Heizvorrichtung 13 und die Vliesstoff-Aufwickelrolle 14 von einer hier lediglich schematisch dargestellten Steuereinrichtung 16 angesteuert, in der Daten erfasst, weiterverarbeitet und zu entsprechenden Ansteuerbefehlen für die einzelnen Bestandteile der Vorrichtung umgewandelt werden, insbesondere auch Taktzeiten für die Weitertaktung der Vliesstoffbahn 11 nach dem Bedrucken eines Vliesstoff-Druckbereichs 12 ermittelt und vorgegeben werden.

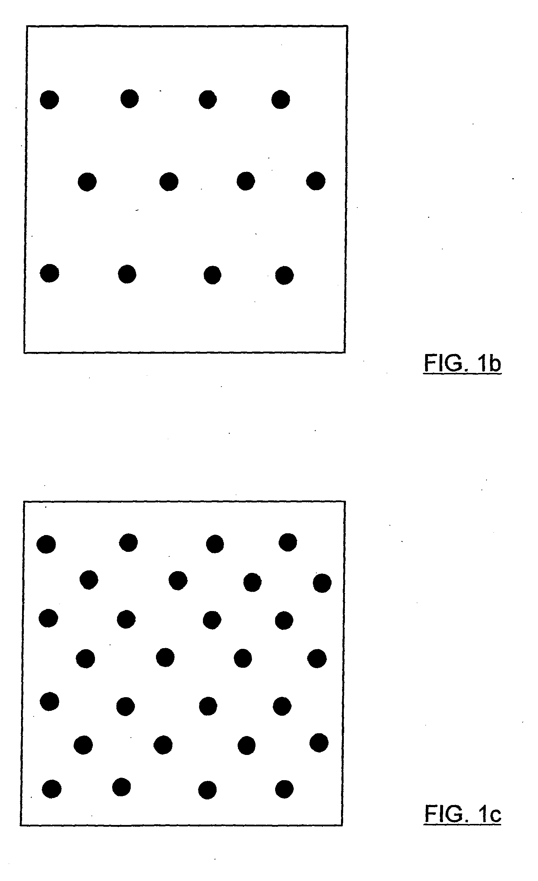

Als Druckfarbe wurden gemäß einem konkreten Ausführungsbeispiel, das hervorragende Ergebnisse bezüglich der Nichtablösbarkeit des Beutelaufdrucks 5 gezeigt hat, 105g einer Polyurethanfarbe und 30 g Härter mit einer Transparentpaste so vermischt, dass der gewünschte Farbton entstanden ist. Die Farbe wurde dann mittels der Siebdruckvorrichtung 9 auf die Vliesstoffbahn 11 im Vliesstoff-Druckbereich 12 aufgebracht, und zwar dergestalt, dass auf 1 cm² Vlies 0,18 mg der Zweikomponentenfarbe aufgedruckt worden ist. Die Druckfarbe wird hier beispielhaft so aufgedruckt, dass ein 28er-Raster ausgebildet wird, d. h. dass pro cm² 28 Rasterpunkte aufgedruckt sind, wie dies in der Fig. 1c stark vergrößert und lediglich schematisch dargestellt ist. Alternativ können Raster zwischen 12 und 48 Rasterpunkten gewählt werden zur Einstellung der wirkstoff- und/oder duftstoffspezifischen Gasdurchlässigkeit der Beutelwand. Lediglich zum Vergleich ist in der Fig. 1b noch ein 12er-Raster gezeigt, d. h. ein Raster mit 12 Rasterpunkten pro cm².

Eine fertig aufgerollte Vliesstoff-Aufwickelrolle 14 wird dann bevorzugt noch in eine hier nicht gezeigte Trockenkammer eingebracht, wo sie für eine vorgegebene Zeitdauer mit einem Warmluftstrom von 50°C beaufschlagt wird, um den Trocknungsvorgang noch weiter zu beschleunigen.

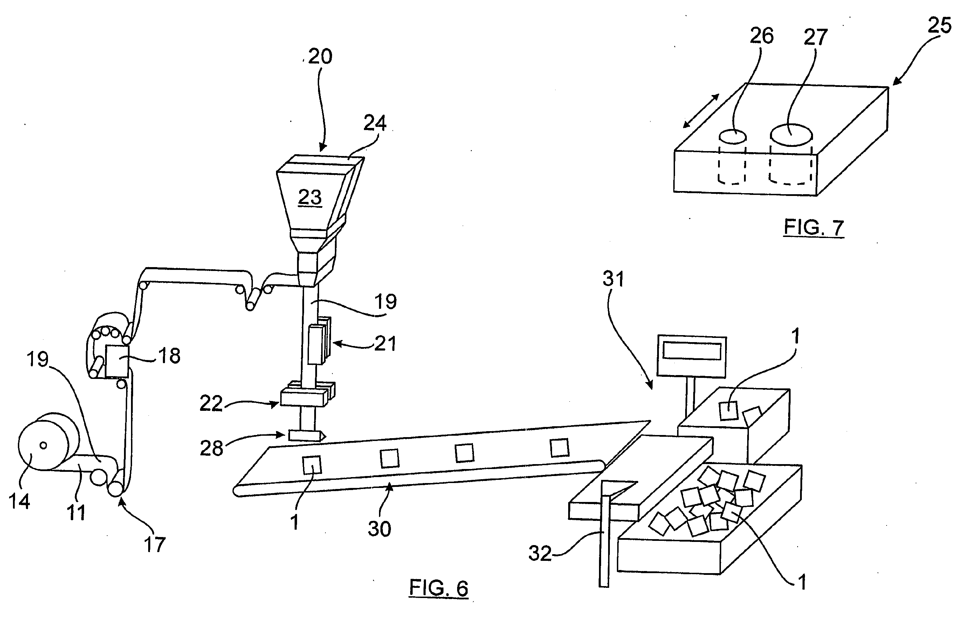

Eine so getrocknete Vliesstoff-Aufwickelrolle 14 kann dann, wie dies der Fig. 6 entnommen werden kann, einer Vorrichtung zum Herstellen von Mottenschutzsäckchen zugeführt werden, in der die bedruckte Vliesstoffbahn 11 wiederum abgewickelt wird und über ein Umlenk- und Spannrollensystem 17 an einem Heißprägestempel 18 vorbeigeführt wird, mittels dem an vorgegebenen Stellen der Vliesstoffbahn 11 eine Prägemarkierung, z. B. eine Kodierung oder dergleichen, aufgebracht werden kann. Die Vorrichtung zur Herstellung des Mottenschutzsäckchens ist hier so getaktet, dass intervallartig immer nur eine ganz bestimmte Länge der Vliesstoffbahn 11 in Bahnlaufrichtung weitergetaktet wird. Dementsprechend wird der Heißprägestempel 18 so mittels einer hier nicht dargestellten Steuereinrichtung angesteuert, dass auf einem Mottenschutzsäckchen an einer bestimmten vorgegebenen Stelle die Prägemarkierung aufgebracht ist, z. B. stets am unteren Säckchenrand eines fertigen Mottenschutzsäckchens.

Die Vliesstoffbahn 11 ist in der schematischen Darstellung der Fig. 6 auf ihrer bezogen auf die Bahnlaufrichtung unteren Seite mit dem Beutelaufdruck 5 versehen. Auf ihrer Oberseite 19 dagegen ist die Vliesstoffbahn 11 mit einer thermoplastischen Beschichtung, beispielsweise einer Polyethylenschicht beschichtet, deren Funktion nachfolgend noch näher erläutert wird.

Ausgehend vom Heißprägestempel 18 wird die Vliesstoffbahn dann unterhalb eines zweikammrigen Dispensers 20 als Bestandteil einer Befüllvorrichtung im Wesentlichen um 90° nach unten umgelenkt. Die Umlenkung erfolgt hierbei so, dass eine Art Schlauchbeutel entsteht, bei der die einander quer zur Bahnlaufrichtung gesehen gegenüberliegenden Bahnbereiche mit ihren beschichteten Oberseiten 19 aneinander zur Anlage gebracht und anschließend mittels bezogen auf die Bahnlaufrichtung seitlicher Schweißbacken 21 miteinander auf einer vorgegebenen Bahnlänge, die im Wesentlichen der späteren Mottenschutzsäckchenlänge entspricht, verschweißt werden. Gleichzeitig oder zeitversetzt dazu wird zur Ausbildung einer eine Beutelöffnung aufweisenden Beuteltasche, wiederum bezogen auf die Bahnlaufrichtung, mittels quer darunter verlaufender Schweißbacken 22 eine Querverschweißung der Vliesstoffbahn 11 vorgenommen.

Wie dies der schematischen Darstellung der Fig. 6 entnommen werden kann, liegt eine derartig ausgebildete Beuteltasche unmittelbar unterhalb des zweikammrigen Dispensers 20, der nachfolgend näher beschrieben wird: Der Dispenser 20 weist eine erste Kammer 23 für das insektizidhaltige Trägermaterial 3 und eine zweite Kammer 24 für das Füllmaterial 4 auf. Pro Kammer 23, 24 ist hier eine Auslassöffnung vorgesehen, die mittels eines in der Fig. 7 schematisch dargestellten Schiebeblocks 25 verschlossen werden können. Dieser Schiebeblock 25 weist eine erste Durchlassöffnung 26 und eine zweite Durchlassöffnung 27 auf, wobei die erste Durchlassöffnung 26 der ersten Kammer 23 und die zweite Durchlassöffnung 27 der zweiten Kammer 24 zugeordnet ist. Befindet sich der Schiebeblock 25 für eine mittels der hier nicht dargestellten Steuereinrichtung vorgegebene Zeitdauer in einer mit den beiden Auslassöffnungen der Kammern 23, 24 fluchtenden Ausrichtung, kann eine vorgegebene Menge an Trägermaterial 3 aus der ersten Kammer 23 und die erste Durchlassöffnung 26 sowie eine vorgegebene Menge von Füllmaterial 4 aus der zweiten Kammer 24 über die zweite Durchlassöffnung 27 in die Beuteltasche eingebracht werden. Neben der Verweilzeit in dieser fluchtenden Stellung ist für die abgegebene Menge auch noch die Größe bzw. der Durchmesser der Durchlassöffnungen entscheidend, der hier beispielhaft unterschiedlich groß gewählt ist. Nach Ende dieses Befüllvorgangs wird der Schiebeblock 25 gesteuert verfahren, und zwar dergestalt, dass die Auslassöffnungen der ersten Kammer 23 und zweiten Kammer 24 mittels des Verschiebeblocks verschlossen sind. Zu diesem Zeitpunkt wird dann die Vorrichtung weitergetaktet und die mit dem Trägermaterial 3 und dem Füllmaterial 4 befüllte Beuteltasche gelangt mit ihrem oberen Öffnungsrandbereich unterhalb die quer verlaufenden Schweißbacken 22, die anschließend betätigt werden, um den Beutel ganz zu schließen und ein fertig befülltes Mottenschutzsäckchen 1 auszubilden.

Zur Vereinzelung dieser fertig befüllten Mottenschutzsäckchen 1, die noch mit der Vliesstoffbahn 11 verbunden sind, wird mittels einer hier ebenfalls lediglich schematisch dargestellten Schneidvorrichtung 28 das fertig befüllte Mottenschutzsäckchen 1 abgelängt, wobei gleichzeitig mittels einer hier nicht im Detail gezeigten Stanzvorrichtung auch noch eine Aufhängeöffnung 29 in den Säckchenrandbereich eingebracht werden kann.

Wie dies insbesondere aus der Fig. 1a ersichtlich ist, sind die Mottenschutzsäckchen 1 somit durch die Schweißbacken U-förmig verschweißt. Dies erfolgt konkret so, dass die Schweißbacken 21 und 22 die Säckchenwände an den U-Bereichen zur Anlage bringen und zwischen sich verklemmen, so dass diese mit z. B. einer Polyethylenschicht beschichteten Bereiche entsprechend der Ausgestaltung nach Fig. 1a U-förmig miteinander verschmolzen werden.

Die abgelängten Mottenschutzsäckchen 1 fallen dann auf eine Fördereinrichtung 30, die die Mottenschutzsäckchen auf oder über eine Wägeeinrichtung 31 befordert, mittels der das Gewicht jedes einzelnen Mottenschutzsäckchens 1 ermittelt wird. Für den Fall, dass das Mottenschutzsäckchen 1 nicht innerhalb des vorgegebenen Gewichtsbereiches liegt, wird dieses mittels einer Drucklufteinrichtung 32 aussortiert. Die für in Ordnung befundenen Mottenschutzsäckchen 1 werden dagegen gesammelt und zu einer Folienumverpackungsvorrichtung, die hier nicht im Detail dargestellt ist, transportiert, wo die Mottenschutzsäckchen 1 mit der Folienumverpackung 7 luftdicht umschlossen werden.

Für die Zubereitung des Insektizides, mit dem das Trägermaterial 3 zu tränken ist, wird bevorzugt der Wirkstoff Transfluthrin im Trockenschrank auf ca. 50°C erhitzt. Sofern dieser Wirkstoff mittels einem Duftstoff kombiniert werden soll, kann einer bestimmten Menge des geschmolzenen Transfluthrins eine ebenfalls bestimmte Menge eines Duftstoffes, z. B. eines Lavendel-Duftstoffes langsam zugegeben werden. Die Zugabe erfolgt bevorzugt in einer Mischtrommel, in der die Mischung beispielsweise 15 Minuten gerührt wird, so dass eine homogene Duft-Wirkstoff-Lösung entsteht.

Anschließend wird dann diese Duft-Wirkstoff-Lösung einem Trägermaterial aus einem mikroporösen Kunststoffgranulat zugeführt, das bis zu 200% seines Eigengewichtes an Duft-Wirkstoff-Lösung aufnehmen kann. Konkret wird hier eine vorgegebene Menge des Granulats ebenfalls wiederum in ein mit einem Rührwerk versehenes Gefäß eingefüllt und eine bestimmte Menge der Duftstoff-Wirkstoff-Lösung zeitlich kontrolliert eingespritzt. Die Befüllgeschwindigkeit beträgt für besonders gute Mischergebnisse ca. 150 ml/min, wobei die Befüllung für 2 Minuten erfolgt. An diese Befüllphase schließt sich dann eine vorgegebene Pause von ca. 20 Sekunden an, innerhalb der die zudosierte Charge eingemischt wird, bevor der nächste Befüllvorgang startet. Dieser Vorgang wird solange wiederholt, bis die gewünschte Duftstoff-Wirkstoff-Charge vollständig eingemischt ist. Durch diese Methode wird ein gleichmäßiges Beladen des mikroporösen Kunststoffes ermöglicht. Für diese Verfahrensführung behält sich die Anmelderin explizit die Einreichung einer separaten Teilanmeldung oder dergleichen vor.

## Patentansprüche

1. Verfahren zum Bedrucken eines Vliesstoffes für Beutel für insektizid-und/oder duftstoffhaltiges Trägermaterial, insbesondere für Mottenschutzsäckchen, **dadurch gekennzeichnet, dass** der Vliesstoff als Vliesstoffbahn (11) mit einem Vliesstoff-Druckbereich (12) für eine vorgegebene Verweilzeit in eine Siebdruckvorrichtung (9), insbesondere in eine Flachbett-Siebdruckvorrichtung, eingebracht wird, in der der Vliesstoff einseitig mit Druckfarbebedruckt wird.

2. Verfahren nach Anspruch 1, **dadurch gekennzeichnet, dass** der Vliesstoff mit einer bei einer Beutelwandbenetzung und/oder -durchnässung mit Insektizid und/oder Duftstoff nicht abfärbenden Druckfarbe bedruckt wird.

3. Verfahren nach Anspruch 1 oder 2, **dadurch gekennzeichnet, dass** der Vliesstoff mit einer einen Härterbestandteil aufweisenden Druckfarbe bedruckt wird.

4. Verfahren nach einem der Ansprüche 1 bis 3, **dadurch gekennzeichnet, dass** der unbedruckte Vliesstoff von einer in Bahnlaufrichtung gesehen vor der Siebdruckvorrichtung (9) angeordneten Vliesstoff-Abwickelrolle (10) abgewickelt wird,
dass der bedruckte Vliesstoff auf eine in Bahnlaufrichtung gesehen nach der Siebdruckvorrichtung (9) angeordnete Vliesstoff-Aufwickelrolle (14) aufgewickelt wird, und
dass im Bereich der Vliesstoff-Aufwickelrolle (14) eine Erfassungseinrichtung vorgesehen ist, die die Vliesstoffbahnspannung und/oder den Druckbildabstand zwischen den einzelnen jedem Beutel (1) zugeordneten Druckbildern (5) vorgibt und erfasst, wobei die von der Erfassungseinrichtung erfassten Ergebnisse an eine Steuer- und/oder Regeleinrichtung (16) übermittelt werden, die anhand dieser Ergebnisse die Bedruckparameter, insbesondere die Vliesstoffbahnspannung sowie die Taktzeit und damit die Verweilzeit des Vliesstoff-Druckbereiches (12) in der Siebdruckvorrichtung (9), vorgeben.

5. Verfahren nach Anspruch 4, **dadurch gekennzeichnet, dass** der Druckbildabstand mittels einer optischen Messeinrichtung, insbesondere wenigstens einer Photozelle, an der die bedruckte Vliesstoffbahn (11) vorbeibewegt wird, erfasst wird.

6. Verfahren nach Anspruch 4 oder 5, **dadurch gekennzeichnet, dass** die Siebdruckvorrichtung (9) mit ihrem bedruckten Vliesstoff-Druckbereich (12) weitergetaktet wird dergestalt, dass der frisch bedruckte Vliesstoff-Druckbereich (12) einer Trocknungseinrichtung zugeführt wird, in der dieser frisch bedruckte Vliesstoff-Druckbereich mit Wärme von wenigstens einer Heizvorrichtung (13), insbesondere eines Heizstrahlers beaufschlagt wird.

7. Verfahren nach Anspruch 6, **dadurch gekennzeichnet, dass** die Temperatur zwischen 40 bis 70°C beträgt.

8. Verfahren nach Anspruch 7, **dadurch gekennzeichnet, dass** der getrocknete Vliesstoff-Druckbereich (12) anschließend auf eine eine vorgegebene Länge an bedrucktem Vliesstoff aufweisende Vliesstoffrolle (14) aufgewickelt und in eine Trockenkammer eingebracht wird, in der die Vliesstoffrolle (14) mit einem Warmluftstrom vorgegebener Temperatur, insbesondere von 40 bis 70°C, beaufschlagt wird.

9. Vorrichtung zur Durchführung eines Verfahrens zum Bedrucken eines Vliesstoffes eines ein insektizid- und/oder duftstoffhaltiges Trägermaterial aufweisenden Beutels nach einem der Ansprüche 1 bis 8, **dadurch gekennzeichnet, dass** die Vorrichtung eine Siebdruckvorrichtung (9) aufweist, in der der Vliesstoff in einem Vliesstoff-Druckbereich (12) einseitig mit Druckfarbe bedruckt wird.

10. Vorrichtung nach Anspruch 9, **dadurch gekennzeichnet, dass** der Siebdruckvorrichtung (9) in Bahnlaufrichtung gesehen eine Vliesstoff-Abwickelrolle (10) vorgeschaltet ist, von der der unbedruckte Vliesstoff abgewickelt wird,
dass der Siebdruckvrorrichtung (9) in Bahnlaufrichtung gesehen eine Vliesstoff-Aufwickelrolle (14) nachgeschaltet ist, auf der der bedruckte Vliesstoff aufgewickelt wird, und
dass im Bereich der Vliesstoff-Aufwickelrolle (14) eine Erfassungseinrichtung vorgesehen ist, die die Vliesstoffbahnspannung und/oder den Druckbildabstand zwischen den einzelnen jedem Beutel (1) zugeordneten Druckbildern (5) vorgibt und erfasst, wobei die von der Erfassungseinrichtung erfassten Ergebnisse an eine Steuer- und/oder Regeleinrichtung (16) übermittelt werden, die anhand dieser Ergebnisse die Bedruckparameter, insbesondere die Vliesstoffbahnspannung sowie die Taktzeit und damit die Verweilzeit des Vliesstoff-Druckbereiches (12) in der Siebdruckvorrichtung (9), vorgeben.

11. Vorrichtung nach Anspruch 10, **dadurch gekennzeichnet, dass** eine optische Messeinrichtung, insbesondere wenigstens eine Photozelle vorgesehen ist, an der die bedruckte Vliesstoffbahn (11) zur Erfassung des Druckbildabstandes vorbeibewegt wird, erfasst wird.

12. Vorrichtung nach Anspruch 10 oder 11, **dadurch gekennzeichnet, dass** der Siebdruckvorrichtung eine Trocknungseinrichtung nachgeschaltet ist, in der der frisch bedruckte Vliesstoff-Druckbereich mit Wärme von wenigstens einer Heizvorrichtung (13) beaufschlagt wird.

13. Beutel für insektizidhaltiges Trägermaterial, insbesondere Mottenschutzsäckchen, insbesondere hergestellt nach einem Verfahren gemäß der Ansprüche 1 bis 8,
mit einer aus einem dampf- und/oder gasdurchlässigen Vliesstoff gebildeten Beutelwand,
mit einem von der Beutelwand umgrenzten Hohlraum als Beutelinnenraum (2), in dem ein insektizidhaltiges Trägermaterial (3) aufgenommen ist, und
mit einem auf der Beutelaußenseite als Sichtseite mittels einer Druckfarbe aufgebrachten Beutelaufdruck (5),
**dadurch gekennzeichnet, dass** der Beutelaufdruck (5) zur Einstellung einer vorgegebenen Gasdurchlässigkeit mit einer vorgegebenen Anzahl von Rasterpunkten pro vorgegebener Fläche auf die Beutelwand aufgedruckt ist.

14. Beutel nach Anspruch 13, **dadurch gekennzeichnet, dass** die Anzahl der Rasterpunkte zwischen 12 und 48 Rasterpunkte pro 1 cm² bedruckter Fläche beträgt.

15. Beutel nach Anspruch 13 oder 14**, dadurch gekennzeichnet, dass** im Beutelinnenraum (2) zusätzlich zum insektizid- und duftstoffhaltigen Trägermaterial (3) weiteres Füllmaterial (4), insbesondere Kunststoffgranulat und/oder gekapselte Duftstoffe und/oder Dufthölzer und/oder Blüten aufgenommen ist.
